# EUROPÄISCHE PATENTANMELDUNG

(11) **EP 4 559 552 A1**
(43) Veröffentlichungstag der Anmeldung: **28.05.2025**
(21) Anmeldenummer: 24213637.2
(22) Anmeldetag: 18.11.2024
(51) Int. Cl.: B01D 19/00, F24D 19/08, B04C 5/04, B04C 9/00

(54) **GAS-FLÜSSIG-ZYKLONABSCHEIDER**

(30) Priorität: 21.11.2023 DE 102023132333
(71) Anmelder: Vaillant GmbH, 42859 Remscheid NRW (DE)
(72) Erfinder: Strobel, Martin, 42929 Wermelskirchen (DE); Reinertz, Thomas, 42897 Remscheid (DE); Raeck, Udo Paul, 50259 Pulheim (DE); Klaes, Jannis, 53506 Ahrbrück (DE)
(74) Vertreter: Popp, Carsten

(57) **Zusammenfassung**

Entgasungsvorrichtung, geeignet für den Sekundärkreis einer Wärmepumpe, welche ein vertikal angeordnetes zylindrisches Gehäuse (1) aufweist und durchströmbar ist, und im oberen Teil des zylindrischen Gehäuses ein tangentialer Zulauf (2) für einen Flüssigkeitsstrom angeordnet ist, und am oberen Ende des oberen Teils des zylindrischen Gehäuses eine zentrische Öffnung (6) vorgesehen ist, wobei an dieser zentrischen Öffnung (6) ein Siebkörper (7) dichtend fixiert ist, der in das zylindrische Gehäuse (1) hineinragt und mit einer Schließvorrichtung gegen Aus-tritt von Flüssigkeit aus der zentrischen Öffnung ausgestattet ist, die zentrische Öffnung (6) mit einer Ableitung für Gas verbunden ist, am unteren Ende des unteren Teils des zylindrischen Gehäuses (1) ein tangentialer Abzug (4) für einen Flüssigkeitsstrom vorgesehen ist.

## Beschreibung

Die Erfindung betrifft die Abscheidung von entzündlichen oder schädlichen gasförmigen Kohlenwasserstoffen, die auch teil- oder per-halogeniert sein können, aus einem Wärmepumpensystem in einen in einem Gebäude aufgestellten Heizkreislauf oder Kühlsolekreislauf, im Folgenden als Wärmeträgerkreislauf bezeichnet, durch eine Vorrichtung und ein Verfahren zur hocheffizienten Abscheidung der Gasphase aus einer Zweiphasenströmung mit einer homogenen flüssigen und einer heterogenen gasförmigen Phase.

Einerseits ist bekannt, dass Heizkreisläufe gelegentlich entlüftet werden müssen, da sich Luft im System ansammeln kann. Meist geschieht dies durch Undichtigkeiten an erhöhten Stellen im Heizkreislauf, bei denen eine Undichtigkeit in Verbindung mit Unterdruck zum Ansaugen von Luft in den Wasserkreislauf führt. In manchen Fällen handelt es sich auch um Luft, die in Nachfüllwasser gelöst ist und die bei dessen Erwärmung freigesetzt wird. Dasselbe gilt für Sole-Split-Anlagen, bei denen sich Sole im Heizkreis befindet und auch für Klimaanlagen. Je nachdem, welche Zwecke ein solcher Wärmeträgerfluidkreislauf erfüllen oder welche Umgebungsbedingungen er zu bewältigen hat, können neben dem eigentlichen Wärmeträger, meistens Wasser, auch Additive dem Wärmeträgerfluidkreislauf hinzugesetzt werden. Hierbei handelt es sich meist um Frostschutzmittel oder Korrosionsschutzmittel.

Andererseits werden inzwischen in Wärmepumpen und in Kühl- und Gefrieranlagen entzündliche Kältemittel als Arbeitsfluide verwendet, die den Vorteil haben, bei ihrer versehentlichen Freisetzung weder das Klima noch die Ozonschicht zu schädigen oder deren Freisetzung wenigstens weniger schädlich ist. Eine solche versehentliche Freisetzung ist aufgrund deren Brennbarkeit und sonstigen Schadwirkung aber möglichst zu vermeiden. Wie eine solche Vermeidung in einen Kühlraum oder in einen Aufstellungsraum einer Wärmepumpe effektiv vermieden werden kann, wird beispielsweise in der DE 10 2011 011 210 A1 beschrieben.

In Kältekreisen, in denen solche Arbeitsfluide eingesetzt werden, können solche unbeabsichtigten Freisetzungen aber auch über die Wärmeübertrager passieren, die als Kondensatoren und Verdampfer zum Einsatz kommen und die mit dem Wärmeträgermedium, also dem Heizungskreislauf oder Kühlsolekreislauf, über ihre Austauschflächen verbunden sind. Im Unterschied zu herkömmlichen Gasbrennkesseln steht das Arbeitsfluid im Kältekreis unter einem höheren Druck als das Wärmeträgerfluid im Heizkreis oder Kühlsolekreis, es könnte also bei Leckagen leicht in das unter geringerem Druck stehenden Wärmeträgermedium gelangen.

Um dies so weit wie möglich zu verhindern, werden im herkömmlichen Stand der Technik doppelwandige Wärmeübertrager verwendet, wie sie beispielsweise in den Patentschriften DE 11 2019 001 344 T5, DE 11 2019 001 350 und DE 11 2019 001 351 T5T5 für Wärmepumpen beschrieben sind, die das Arbeitsfluid R290 gegen eine Wasser-Propylenglykol-Sole als Wärmeträgerfluid führen. Neben dem hohen Preis führt dieser Einsatz aber zu Effizienzverlusten, da die Materialien, wie beispielsweise etwa Edelstahl, Wärme schlecht leiten und der dünne Luftspalt zwischen den Wärmeübertragerflächen wie eine Isolierung wirkt. Praktisch bedeutet dies, dass höhere Temperaturdifferenzen in den Wärmeübertragern eingestellt werden müssen, was den Wirkungsgrad von Wärmepumpen herabsetzt.

Die Konstruktion solcher doppelwandigen Wärmeübertrager, die einen Spezialfall der Zwischenraum-Wärmeübertrager darstellen, ist auch deshalb aufwändig, weil der Luftspalt, der den Zwischenraum bildet, möglichst klein sein soll. Wenn sich auf beiden Seiten der Wärme übertragenden Fluide aber unterschiedliche Drücke einstellen, was bei Wärmepumpen üblich ist, neigen die dünnen Bleche dazu, sich zu verbiegen und auszubeulen. Auch während des Betriebs besteht die Tendenz, sich zu verziehen, wenn sich die Temperaturdifferenzen ändern und die Bleche sich thermisch ausdehnen oder zusammenziehen. Diesem Dehnen und Biegen muss durch Stege und Stützen im Luftspalt begegnet werden, was im Material zusätzliche Spannungen hervorruft und nach häufigen Lastwechseln Materialversagen provoziert. Es wäre also vorteilhaft, wenn solche doppelwandigen Wärmeübertrager vermieden werden könnten.

Eine andere bekannte Möglichkeit ist, einen Kältemittel/Luft-Abscheider und ein Sicherheitsventil oder ein Rückschlagventil im Heizkreis zu verwenden. Die WO 2021/160221 A1 beschreibt eine Wärmepumpenanlage mit einem Primärkreis, in welchem ein brennbares Arbeitsfluid in einem Kreisprozess geführt wird, und mit einem Sekundärkreis, der als Heizungskreis ausgebildet ist. In Strömungsrichtung des Heizkreises wird ab einer bestimmten Gasmenge ein Rückschlagventil geschlossen und andererseits unterbindet eine Entgasungseinrichtung die Strömung des Heizkreismediums. Als Entgasungseinrichtung dient ein Schwimmer.

Auch Schnellentlüfter und Membranentgaser sind als Entgasungsvorrichtungen bekannt. Problematisch ist hierbei stets, dass beim Entgasen die Zündgrenzen bei Gas-Luftgemischen, die brennbare Kältemittel enthalten, nicht sicher eingehalten werden können und daher für eine sichere und ungefährliche Ableitung zu sorgen ist.

Weitere Schnellentlüfter werden in den Schriften DE 20 2018 003 488 U1, DE 10 2010 032 394 A1, DE 20 2018 000 709 , EP 2 988 043 B1, EP 1 035 365U1 B1 und WO 2006/000453 A1 beschrieben.

Gasabscheider, die sich für Heizkreise eignen und die für Sekundärkreisläufe von Wärmepumpen eingesetzt werden können, werden auch in der EP 3 513 855 A1 beschrieben. Hierbei wird ein horizontal ausgerichteter zylindrischer Gasabscheider mit einer unbeweglichen Siebkammer ausgestattet, wobei das Sieb der Siebkammer zylindrisch, prismatisch, kegelstumpfartig oder plisseemanschettenartig ausgebildet ist und der Gasabscheider und die Siebkammer achsparallel sind. Die Siebkammer wird durch ein Lochblech gebildet, kann aber auch als Drahtgitter ausgebildet sein. Das Flüssig-Gas-Gemisch tritt zunächst ohne Drall in eine erste Teilkammer ein, in der sich die Siebkammer befindet. Die Siebkammer wird dabei geflutet, die Strömung ist aber stark beruhigt und die Gasblasen können aufsteigen. Dort gelangen sie in die obere zweite Teilkammer, die einen Gasabzug aufweist, während die Flüssigkeit in die untere zweite Teilkammer strömt und von dort abgezogen wird. Da kleine Blasen in einer beruhigten Strömung nur langsam aufsteigen, wird eine lange Verweilzeit der Flüssigkeit erforderlich, woraus ein großes Bauvolumen folgt. Das gilt umso mehr, als zugesetzte Frostschutzmittel wie Glykol das Aufsteigen der Blasen noch weiter verlangsamen.

Für den Fall, dass erwartet werden kann, dass sich auch brennbare Kältemittel im abzuscheidenden Gas-Luftgemisch befinden könnten, sind auch Entlüfter beschrieben worden, bei denen eine Trennung schon im Entlüfter selbst durchgeführt wird. Dies geschieht vorzugsweise durch Membranen, ein solcher Membran-Abscheider wird in der EP 3 747 532 A1 beschrieben.

Weitere Verfahren und Vorrichtungen zur Bewältigung der Gasabscheideproblematik sind aus der EP 3 764 001 A1 und der EP 3 882 526 A1 bekannt geworden. In der EP 3 764 001 A1 wird ein Bypassstrom eines Wärmeträgerfluids für eine Strahldüse genutzt, um durch die dadurch bewirkte Beschleunigung der Strömung einen Druckabfall zu bewirken, der dazu führt, dass gelöstes Kältemittel gasförmig aus der Flüssigkeit ausgast und abscheidbar wird.

In der EP 3 882 526 A1 werden gasförmiges Kältemittel und Luft gemeinsam aus einem Wärmeträgerfluid abgeschieden und danach voneinander mittels einer Membran getrennt. Beide Lehren können zwar gut kombiniert werden, es kann jedoch nicht verhindert werden, dass sich weiteres gelöstes Kältemittel im Wärmeträgerfluid des Sekundärkreislauf befinden könnte und dann unter ungünstigen Bedingungen an einer ungünstigen Stelle im Wärmeträgerkreislauf ausgast.

Die EP 4 166 854 A1 beschreibt eine Vorrichtung und ein Verfahren, mit der leckagebedingt ausgegastes Kältemittel sicher im Wärmeträgerfluid gelöst wird, dies geschieht mittels einer Mischstation und ggf. unter Zusatz eines lösungsverbessernden Stoffes.

Diese Methoden und Apparate sind jedoch aufwändig und teuer und lösen das Problem oft nicht befriedigend in allen Betriebszuständen. Der bisherige Abscheidegrad von Serienkomponenten bisheriger Technologien erreicht bislang 40 bis 70% bei üblicher Baugröße. Oft sind diese Komponenten mit einem sehr hohen Druckverlust verbunden. Hohe Abscheidegrade können bislang nur durch große Bauvolumina erreicht werden. Benötigt wird aber ein mittlerer Abscheidegrad von mindestens 95% bei einem Leckagen-Massenstrom von bis zu ca. 0,25 g/s, und einem Volumenstrom im Heizkreis von mehr als 3500 l/h. Die Bauraumgröße sollte ohne Anschlüsse ein zylindrisches Maß mit einem Außendurchmesser von 150 mm und einer Höhe von 400 mm, vorzugsweise ein zylindrisches Maß mit einem Außendurchmesser von 130 mm und eine Höhe von 300 mm nicht übersteigen. Gleichzeitig sollte ein niedrigerer Druckverlust als 80 mbar erreicht werden, wenn 3500 l/h durch den Abscheider strömen, um nicht durch die höhere Pumpenleistung den Gesamtwirkungsgrad einer Wärmepumpenanlage zu verringern. Bei größeren Volumenströmen wären die Querschnittsflächen entsprechend größer zu wählen, Skalierbarkeit sollte möglich sein.

Die DE 33 27 846 A1 beschreibt ein Entlüftungsventil mit einem Gehäuse, einem darin vertikal beweglichen Schwimmer, einem am oberen Ende des Gehäuses angeordnetem Ventil für die Entlüftung von Heizungsanlagen, bei dem an der Oberseite des Gehäuses ein nach oben ragender länglicher Gehäuseansatz vorgesehen ist, der in seinem oberen Teil einen nach unten weisenden Ventilsitz mit einem Ventilteller bildet, der vom Schwimmer betätigt wird. Unterhalb des Schwimmers werden Einlass- und Auslasskanäle für die zu entgasende Flüssigkeit so angeordnet, dass sich eine rotierende Strömung ergibt und eine zylindrischer Siebkörper eine Anlagerung und Abscheidung auch kleiner Luft- und Gasbläschen ermöglicht.

Die Aufgabe der Erfindung ist daher, eine Entgasungsvorrichtung, die kompakt ist und über einen sehr hohen Abscheidegrad verfügt, mit Eignung für einen Sekundärkreis für Wärmepumpen bereitzustellen.

Die Aufgabe wird gelöst durch eine Entgasungsvorrichtung für den Sekundärkreis einer Wärmepumpe,
- welche ein vertikal angeordnetes zylindrisches Gehäuse aufweist und durchströmbar ist, und
- im oberen Teil des zylindrischen Gehäuses ein tangentialer Zulauf für einen Flüssigkeitsstrom angeordnet ist,
- am oberen Ende des oberen Teils des zylindrischen Gehäuses eine zentrische Öffnung vorgesehen ist,
- an dieser zentrischen Öffnung ein Siebkörper dichtend fixiert ist, der in das zylindrische Gehäuse hineinragt und mit einer Schließvorrichtung gegen Austritt von Flüssigkeit aus der zentrischen Öffnung ausgestattet ist,
- die zentrische Öffnung mit einer Ableitung für Gas verbunden ist,
- am unteren Ende des unteren Teils des zylindrischen Gehäuses ein tangentialer Abzug für einen Flüssigkeitsstrom vorgesehen ist,
- der tangentiale Zulauf im oberen Gehäuseteil des zylindrischen Gehäuses als Düse ausgebildet ist, und
- die Düse als Schubstrahldüse ausgebildet ist, mit der die Einströmgeschwindigkeit und die Einströmrichtung der zulaufenden Strömung einstellbar sind.

Dadurch, dass im oberen Teil ein tangentialer Zulauf erfolgt, ergibt sich eine rotierende Strömung, bei der die Flüssigkeit nach außen und eventuell vorhandene Gasanteile aufgrund ihrer geringeren Dichte einem nach innen gedrückt werden. Falls Gas in der Flüssigkeit vorhanden ist, ergibt sich eine trichterförmige Flüssigkeitsoberfläche, an deren Oberseite in der Mitte das Gas abgezogen werden kann. Dieses Gas wird mit einer Leitung ins Freie abgeleitet.

Im oberen Teil des zylindrischen Gehäuses ist der tangentialen Flüssigkeitszulauf dabei als Düse ausgebildet. Dadurch, dass die Strömung durch die Düsenwirkung beschleunigt wird, entsteht ein Druckabfall, der die Blasenbildung für gelöstes Gas verbessert. Die Düse ist nach Art einer Schubstrahldüse oder einer Schubvektorsteuerung ausgebildet, damit bei unterschiedlichen Anströmmengen eine einheitliche Strömungsgeschwindigkeit eingestellt werden kann und die Strömungsrichtung dabei so einstellbar ist, dass eine schraubenförmige Strömung entsteht. Die Einstellung der Strömungsrichtung kann dabei sowohl in Höhenrichtung als auch in seitlicher Richtung erfolgen. Dies ist durch verstellbare und gekrümmte Bleche, die in bekanntet Weise blendenartig ineinander und übereinander verschieblich sind, technisch leicht erreichbar.

In einer Ausgestaltung wird der in das zylindrische Gehäuse tangential eintretenden Strömung beim Eintritt durch Leitbleche ein erster Drall aufgeprägt, der den eintretenden Flüssigkeitsstrahl in sich verdrillt. Derartige Dralldüsen sind aus anderen technischen Anwendungen bereits bekannt, so beschreibt die EP 1 820 604 A1 einen Düsenkopf zum Ausbringen einer Flüssigkeit in einen Gasraum, bei der die auszubringende Flüssigkeit stromaufwärts der Düse in Rotation versetzt wird. Durch die Rotation der in die Düse eintretenden Strömung wird eine Strahlaufweitung bzw. eine Auffächerung erreicht. Hier dient die Auffächerung abweichend dazu, innerhalb des Auffächerungskegels bereits eine Teilentgasung zu erreichen. Die Düse und die Verdrillung können in einer gemeinsamen Einströmvorrichtung erfolgen. Hierdurch wird erreicht, dass die Strömung lokal beschleunigt wird, was ebenfalls zum besseren und schnelleren Ausgasen von gelöstem Gas beiträgt.

Weitere Ausgestaltungen betreffen den Siebkörper. Während er im einfachsten Fall nur die Aufgabe erfüllt, dass keine Flüssigkeit in den Gasauslass gelangen kann, kann er durch den Eintritt von Flüssigkeit zu einer Beruhigung führen, was es den Gasblasen erleichtert, sich in der Nähe der Mittelachse zu sammeln und nach oben aufzusteigen. Hierzu wird der Siebkörper bevorzugt wenigstens abschnittsweise als kegelstumpfförmiges oder prismenförmiges Lochblech ausgeführt, welches sich vom Gasauslass an der Oberseite des zylindrischen Gehäuses bis in den unteren Bereich des zylindrischen Gehäuses erstreckt.

Siebzylinder sind aus anderen Anwendungen ebenfalls bekannt. So beschreibt außer der oben zitierten DE 33 27 846 A1 auch die EP 248 186 A1 einen zylindrischen Siebzylinder. Dieser ist gefertigt aus einem rundgebogenem Lochblech mit verstärkenden Tragringen. Hierbei wird jedoch Flüssigkeit oder Pulpe durch die Löcher gefördert, was eine hohe Stabilität erfordert. Vorliegend kann auf derart massive Bauweisen verzichtet werden, da die Fliehkraft der rotierenden Strömung lediglich Gasblasen durch die Löcher bzw. Öffnungen hindurchtreiben soll. Die EP 248 186 A1 geht nicht drauf ein, ob der Siebzylinder selbst oder die durch die Löcher hindurchtretende Flüssigkeit rotieren.

In weiteren Ausgestaltungen werden die Löcher in dem Lochblech des Siebkörpers so geprägt, dass sich auf der zur Mittelachse hin gerichteten Öffnungen an deren Rändern eine gezackte Oberfläche bildet, ähnlich etwa Küchenreiben. Dies erleichtert Blasen, die durch die Öffnungen hindurchtreten, den Durchtritt und sie bleiben nicht an den Löchern hängen, werden also nicht durch die Oberflächenspannung festgehalten und können sich leicht ablösen.

In einer weiteren Ausgestaltung ist vorgesehen, dass sich der Siebkörper mit der Strömung mitdrehen kann. Er benötigt keinen eigenen Antrieb, er muss aber frei gelagert sein. Da in der Nähe der Siebkörperoberfläche weniger Scherkräfte in der Flüssigkeit auftreten, können die entstehenden Gasblasen besser ins Innere treten, der Druckverlust verringert sich und es können höhere Umfangsgeschwindigkeiten eingestellt werden, was das Bauvolumen verringert.

In einer weiteren Ausgestaltung ist innerhalb des Siebkörpers ein Geflecht vorgesehen, welches die Bildung von Schaum unterbindet. Das Geflecht kann aus Drahtwolle oder beständigem Kunststoff bestehen, beispielsweise Kunststoff, der mit Teflon beschichtet ist.

Je nach Menge der Blasen und der Gasmenge insgesamt ist mit Tröpfchenüberriss zu rechnen. Aus diesem Grund ist innerhalb des Siebkörpers in einer Ausgestaltung ein Tröpfchenabscheider am Gasauslass vorgesehen. Das Geflecht und der Tröpfchenabscheider können baulich auch zusammen ausgeführt sein.

Die Erfindung wird nachfolgend beispielhaft anhand der Fig. 1 bis Fig. 8 näher erläutert. Hierbei zeigen
- Fig. 1: das Gehäuse der Entgasungsvorrichtung von außen,
- Fig. 2: eine Übersichtsskizze mit den Hauptströmungsrichtungen,
- Fig. 3: eine Übersichtsskizze mit Strömungsgeschwindigkeits- und Druckverlauf,
- Fig. 4: einen Längsschnitt des Behälters mit Siebkörper,
- Fig. 5: einen Querschnitt durch die Zuströmebene einer ersten Ausführungsform,
- Fig. 6: eine Perspektivskizze der ersten Ausführungsform,
- Fig. 7: einen Querschnitt durch die Zuströmebene einer zweiten Ausführungsform,
- Fig. 8: eine Perspektivskizze der zweiten Ausführungsform.

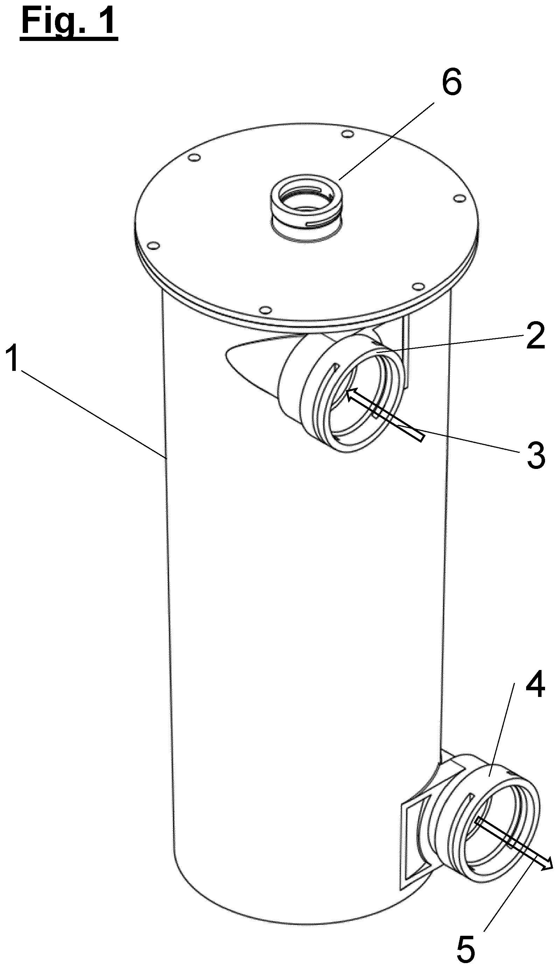

Fig. 1 zeigt das Gehäuse 1 der Entgasungsvorrichtung von außen. Am Gehäuse 1 befindet sich oben die Einströmvorrichtung 2, welche auch hier nicht dargestellte Einbauten enthalten kann, und in die die gashaltige Flüssigkeit 3 zuströmt. Weiterhin befindet sich unten am Gehäuse 1 die Ausströmvorrichtung 4, aus der die entgaste Flüssigkeit 5 ausströmt. Einströmvorrichtung 2 und Ausströmvorrichtung 4 sind beide tangential angeordnet, wobei es nicht darauf ankommt, ob sie radial gegeneinander versetzt, d.h. gegeneinander verdreht, oder vertikal untereinander fluchtend angeordnet sind. Im oberen Bereich befindet sich der Gasauslass 6, der auch mit einem weiteren Abscheider oder einer Trennvorrichtung für Luft und entzündlichem Gas verbunden sein kann.

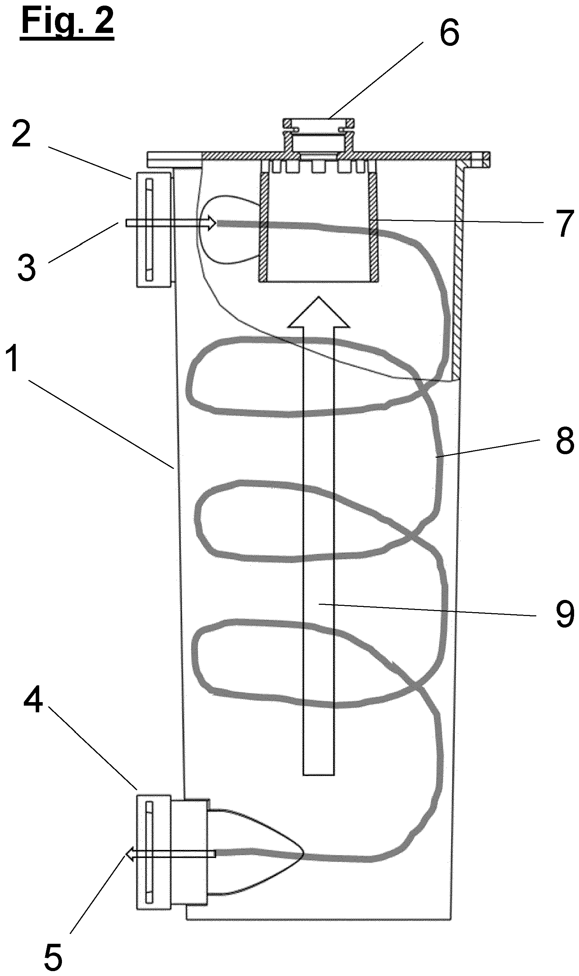

Fig. 2 zeigt eine Übersichtsskizze des seitlich aufgeschnittenen Gehäuses 1 mit der Einströmvorrichtung 2, der Ausströmvorrichtung 4, dem Gasauslass 6 und den Hauptströmungsrichtungen der Flüssigkeit 3 beim Einströmen, der durch die Zentrifugalkraft nach außen gedrückten und in spiraliger Weise nach unten geführten Flüssigkeitsströmung 8, der entgasten Flüssigkeit 5 und dem aufwärtsströmenden Gas 9, welches in den Siebkörper 7 gelangt, der mit dem Gasauslass 6 verbunden ist. Dadurch, dass die Fliehkräfte die Flüssigkeit nach außen an die Behälterwand drücken, entsteht im Inneren um die Mittelachse herum ein Unterdruck, in dem sich die Gasblasen sammeln und nach oben steigen können. In der Höhe des Siebkörpers 7 bewirkt der sich einstellende parabelförmige Flüssigkeitsspiegel, dass sich das Gas als homogene Phase sammeln kann und über den Gasauslass 6 abgeführt wird.

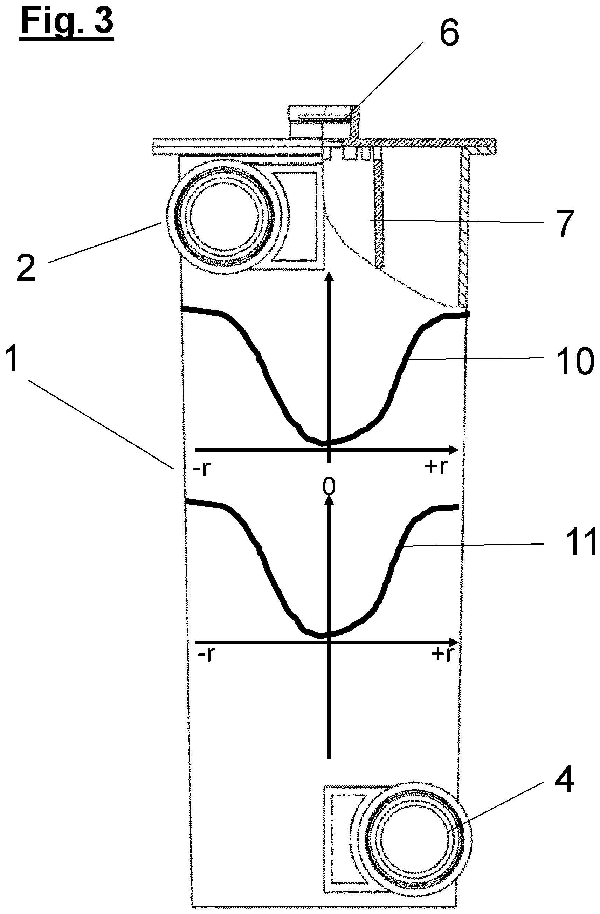

Fig.3 zeigt eine Übersichtsskizze mit dem radialen Verlauf der Tangentialgeschwindigkeit 10 und dem radialen Verlauf des Systemdrucks 11, jeweils qualitativ, über den Durchmesser des Gehäuses 1. Die übrigen Elemente entsprechenden denen in Fig. 1 und 2.

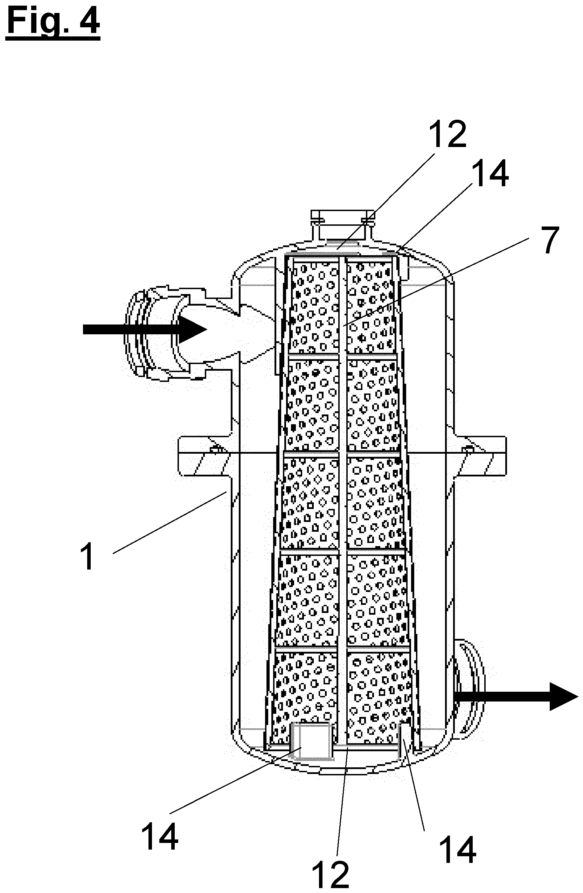

Fig. 4 zeigt einen Längsschnitt des Behälters 1 mit dem Siebkörper 7, der am oberen Ende 12 und am unteren Ende 13 jeweils fixiert ist. Anstelle der Fixierungen 14 können auch geführte Lagerungen vorgesehen sein, wenn sich der Siebkörper 7 mitdrehen soll.

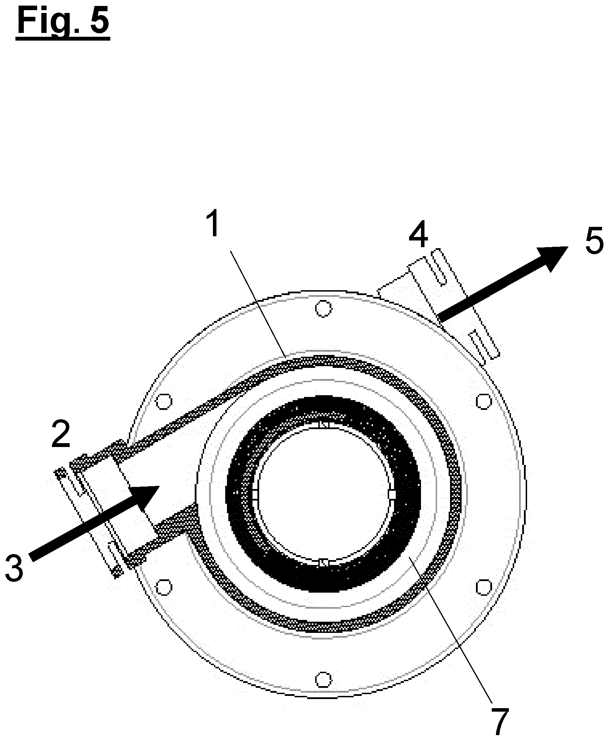

Fig. 5 zeigt einen Querschnitt durch die Zuströmebene einer ersten Ausführungsform des Gehäuses 1, bei dem die Einströmvorrichtung 2 und die Ausströmvorrichtung 4 beide gemeinsam in einer vertikalen Ebene liegen. Die übrigen Elemente entsprechenden denen in den vorangegangenen Figuren.

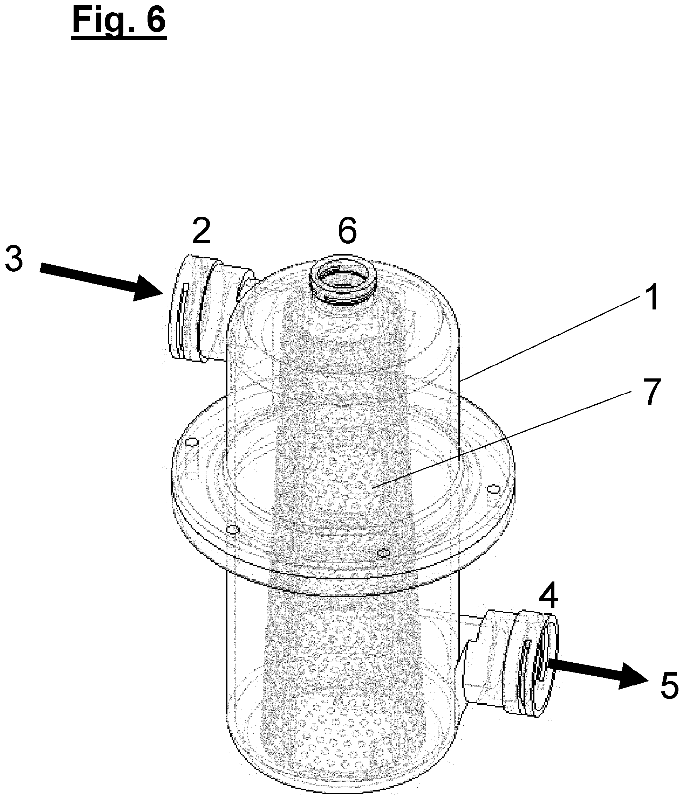

Fig. 6 zeigt eine Perspektivskizze der ersten Ausführungsform, wobei die Elemente denen in den vorangegangenen Figuren entsprechen.

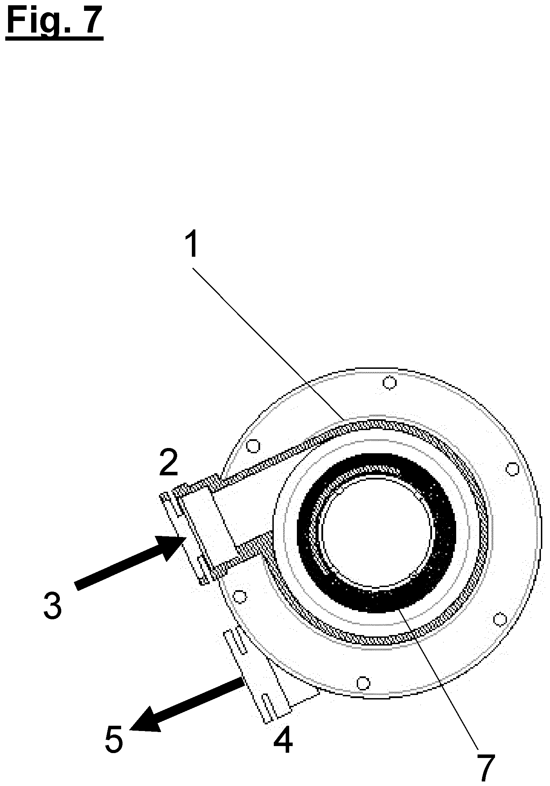

Fig. 7 zeigt einen Querschnitt durch die Zuströmebene einer zweiten Ausführungsform des Gehäuses 1, bei dem die Einströmvorrichtung 2 und die Ausströmvorrichtung 4 beide gemeinsam auf derselben Seite Ebene liegen. Die übrigen Elemente entsprechenden denen in den vorangegangenen Figuren.

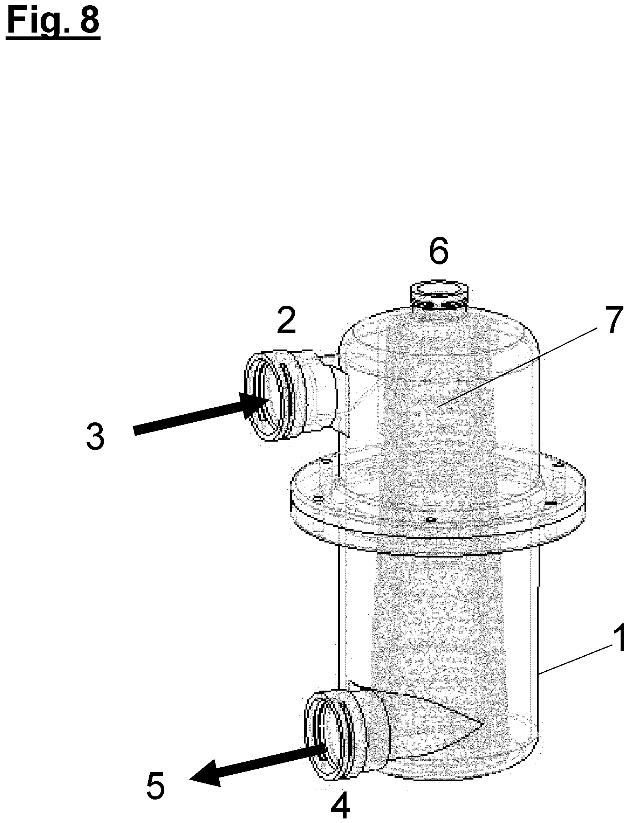

Fig. 8 zeigt eine Perspektivskizze der zweiten Ausführungsform wobei die Elemente denen in den vorangegangenen Figuren entsprechen.

### Liste der Bezugszeichen

- 1: Gehäuse
- 2: Einströmvorrichtung
- 3: gashaltige Flüssigkeit
- 4: Ausströmvorrichtung
- 5: entgaste Flüssigkeit
- 6: Gasauslass
- 7: Siebkörper
- 8: Flüssigkeitsströmung
- 9: aufwärtsströmendes Gas
- 10: radialer Verlauf der Tangentialgeschwindigkeit
- 11: radialer Verlauf des Systemdrucks
- 12: oberes Ende Siebkörper
- 13: unteres Ende Siebkörper
- 14: Fixierung / Lagerung

## Patentansprüche

1. Entgasungsvorrichtung, geeignet für den Sekundärkreis einer Wärmepumpe,
- welche ein vertikal angeordnetes zylindrisches Gehäuse (1) aufweist und durchströmbar ist, und
- im oberen Teil des zylindrischen Gehäuses ein tangentialer Zulauf (2) für einen Flüssigkeitsstrom angeordnet ist, und
- am oberen Ende des oberen Teils des zylindrischen Gehäuses eine zentrische Öffnung (6) vorgesehen ist,
- an dieser zentrischen Öffnung (6) ein Siebkörper (7) dichtend fixiert ist, der in das zylindrische Gehäuse (1) hineinragt und mit einer Schließvorrichtung gegen Austritt von Flüssigkeit aus der zentrischen Öffnung ausgestattet ist,
- die zentrische Öffnung (6) mit einer Ableitung für Gas verbunden ist,
- am unteren Ende des unteren Teils des zylindrischen Gehäuses (1) ein tangentialer Abzug (4) für einen Flüssigkeitsstrom vorgesehen ist,
**dadurch gekennzeichnet, dass**
- der tangentiale Zulauf (2) im oberen Gehäuseteil des zylindrischen Gehäuses (1) als Düse ausgebildet ist, und
- die Düse als Schubstrahldüse ausgebildet ist, mit der die Einströmgeschwindigkeit und die Einströmrichtung der zulaufenden Strömung (3) einstellbar sind.

2. Vorrichtung nach Anspruch 1, **dadurch gekennzeichnet, dass** vor oder in der Düse eine Vorrichtung zur Verdrillung der Flüssigkeitsströmung vorgesehen ist.

3. Vorrichtung nach einem der Ansprüche 1 oder 2, **dadurch gekennzeichnet, dass** der Siebkörper (7) als kegelstumpfförmiges oder prismenförmiges Lochblech ausgeführt ist, welches sich vom Gasauslass (6) an der Oberseite des zylindrischen Gehäuses (1) bis in den unteren Bereich des zylindrischen Gehäuses (1) erstreckt.

4. Vorrichtung nach Anspruch 3, **dadurch gekennzeichnet, dass** die Löcher in dem Lochblech des Siebkörpers (7) so geprägt sind, dass sich auf der zur Mittelachse hin gerichteten Öffnungen an deren Rändern eine gezackte Oberfläche bildet.

5. Vorrichtung nach einem der Ansprüche 3 oder 4, **dadurch gekennzeichnet, dass** der Siebkörper (7) frei und mit der Strömung um die Mittelachse mitdrehbar gelagert ist.

6. Vorrichtung nach einem der Ansprüche 3 bis 5, **dadurch gekennzeichnet, dass** innerhalb des Siebkörpers (7) ein Geflecht vorgesehen ist.

7. Vorrichtung nach einem der Ansprüche 3 bis 5, **dadurch gekennzeichnet, dass** innerhalb des Siebkörpers (7) ein Tröpfchenabscheider am Gasauslass (6) vorgesehen ist.
